# EUROPÄISCHE PATENTSCHRIFT

(11) **EP 2 945 835 B1**
(45) Veröffentlichungstag und Bekanntmachung des Hinweises auf die Patenterteilung: **18.09.2019**
(21) Anmeldenummer: 13810893.1
(22) Anmeldetag: 11.12.2013
(51) Int. Cl.: B23K 31/02, B62D 29/00, B62D 25/06

(54) **DACHRAHMEN UND VERFAHREN ZUR HERSTELLUNG EINES DACHRAHMENS**
ROOF FRAME AND METHOD FOR PRODUCING A ROOF FRAME
CADRE DE TOIT ET PROCÉDÉ DE PRODUCTION D'UN CADRE DE TOIT

(30) Priorität: 19.01.2013 DE 102013000937
(43) Veröffentlichungstag der Anmeldung: 25.11.2015
(73) Patentinhaber: Daimler AG, 70327 Stuttgart (DE)
(72) Erfinder: BENDIKS, Michael, 73207 Plochingen (DE); HUMMEL, Stefan, 78183 Hüfingen (DE); KEMPF, Manfred, 88267 Vogt (DE); RUDLAFF, Thomas, 70469 Stuttgart (DE); STORSBERG, Lutz, 75365 Calw (DE); THALEMANN, Jürgen, 71711 Steinheim (DE)
(74) Vertreter: JENSEN & SON
(86) Internationale Anmeldenummer: PCT/EP2013/003746
(87) Internationale Veröffentlichungsnummer: WO 2014/111109

(56) Entgegenhaltungen:
- WO-A1-99/65759
- WO-A1-2012/037606
- US-B1- 6 408 516
- US-B1- 6 786 538

## Beschreibung

Die Erfindung betrifft ein Verfahren zur Herstellung eines Dachrahmens gemäß Oberbegriff des Anspruchs 1.

Ein gattungsgemäßes Verfahren ist aus der WO 99/65759 A1 bekannt, bei welchem ein Dachhimmelrahmen als Pressteils aus einem Leichtmetall-Rohling hergestellt werden kann.

Aus der DE 10 2008 010 834 A1 geht ein Dachrahmen hervor, welcher ein hutprofilförmiges Blechprofil umfasst, in dem ein Versteifungsstrukturteil aus einem Leichtbauwerkstoff, beispielsweise einem faserverstärkten Kunststoff, aufgenommen ist. Solche Dachrahmen, die eine Mischbauweise aus verschiedenen Materialien aufweisen, werden häufig aufgrund hoher Festigkeits- und Steifigkeitsanforderungen gewählt. Hierbei ergeben sich kritische Fügeverbindungen. Ist der Dachrahmen bei einem öffenbaren Dach vorgesehen, ergeben sich aufgrund verschiedener Wärmeausdehnungskoeffizienten Probleme beim Öffnen oder Schließen des Daches, insbesondere wenn eine besonders hohe oder besonders niedrige Außentemperatur erreicht wird. In der Regel sind zusätzliche Verstärkungselemente nötig, weil die Dachrahmenkonstruktion für sich genommen nicht steif genug ist. Insgesamt ergeben sich so relativ komplexe, schwere Strukturen, die aufgrund der vielfältigen notwendigen Fügetechniken nur schwierig in ein gesamtes Rohbaukonzept integrierbar sind.

Der Erfindung liegt daher die Aufgabe zugrunde, ein Verfahren zur Herstellung eines Dachrahmens zu schaffen, der hohen mechanischen Beanspruchungen dauerhaft standhält, zugleich vergleichsweise leicht ist und unkompliziert in ein Rohbaukonzept für ein Kraftfahrzeug eingefügt werden kann.

Die Aufgabe wird gelöst, indem ein Verfahren mit den Merkmalen des Anspruchs 1 geschaffen wird.

Das Verfahren zur Herstellung eines Dachrahmens für ein Kraftfahrzeug zeichnet sich dadurch aus, dass zumindest ein Teilelement des Dachrahmens aus einem Leichtmetall-Rohling geschmiedet wird. Dabei wird bereits durch die Wahl eines Leichtmetall-Rohlings als Ausgangsmaterial für zumindest ein Teilelement des Dachrahmens dem Leichtbaugedanken Rechnung getragen. Außerdem weisen Schmiedebauteile gegenüber Gussbauteilen oder Blechbauteilen eine erhöhte mechanische Belastbarkeit auf. Dies liegt wesentlich daran, dass beim Schmieden, ein Faserverlauf in dem Bauteil geeignet gestaltet beziehungsweise beeinflusst werden kann, wobei sich die Fasern insbesondere in Bereichen sammeln lassen, die deswegen mechanisch besonders hoch belastbar sind. Insbesondere an Stellen, die eine größere Wandstärke aufweisen, sind massivumgeformte, geschmiedete Bauteile gegenüber Gussbauteilen vorteilhaft, weil die Wahrscheinlichkeit eines Einschlusses von Lunkern in einem Gussbauteil mit steigender Wandstärke steigt. Demgegenüber wird beim Massivumformen, insbesondere beim Schmieden ein sehr homogenes, hochverdichtetes Gefüge ohne Fehlstellen und Lunker erzeugt, wodurch das Bauteil seine hohe mechanische Festigkeit erhält.

Aufgrund der hohen mechanischen Belastbarkeit ist es möglich, die Wandstärke eines geschmiedeten Bauteils im Vergleich zu einem Gussbauteil, aber auch im Vergleich zu einem tiefgezogenen Bauteil oder Blechbauteil zu reduzieren, sodass ein geschmiedetes Bauteil eine geringere Wandstärke und damit ein geringeres Gewicht aufweist als ein Gussbauteil oder Blechbauteil aus dem gleichen Material. Dies trägt wiederum dem Leichtbaugedanken Rechnung.

Aufgrund der Möglichkeit, den Faserverlauf in dem Bauteil Schmieden in geeigneter Weise auszubilden, ist es möglich, dieses belastungsgerecht mit diskontinuierlichem Querschnittsverlauf auszubilden. Mechanisch geringer belastete Bereiche können dabei dünnwandiger ausgebildet werden als mechanisch höher belastete Bereiche, wobei aufgrund des geeignet eingestellten Faserverlaufs, insbesondere einer Bündelung von Fasern in den mechanisch hoch belasteten Bereichen, diese mit kleinerer Wandstärke ausgebildet sein können, als es bei vergleichbaren Guss- oder Blechbauteilen der Fall ist. Neben einer Verringerung des Bauteilgewichts kommt es so zu einer Verschlankung der Bauteilform, sodass zusätzlicher Bauraum in dem Kraftfahrzeug-Rohbau zur Verfügung steht. Dies ermöglicht auch vom Design her die Schaffung neuer Formen.

Aufgrund der hohen mechanischen Festigkeit des geschmiedeten Teilelements sind zusätzliche Verstärkungselemente nicht erforderlich, was die Teilevielfalt stark reduziert und Fügeoperationen in verfahrensökonomischer Weise entfallen lässt. Weiterhin ist ein geschmiedetes Bauteil mit allen Fügetechniken ohne Zusatzaufwand an angrenzende Bauteile der Kraftfahrzeug-Rohbaustruktur anbindbar, wobei das Bauteil insbesondere an angrenzende Karosserie- beziehungsweise Rohbauteile angeschweißt werden kann.

Vorzugsweise wird ein Leichtmetall-Rohling verwendet, der ein Leichtmetall oder eine Leichtmetalllegierung, insbesondere Aluminium oder eine Aluminiumlegierung, oder Magnesium oder eine Magnesiumlegierung, umfasst, bevorzugt aus einem der genannten Materialien besteht. Insbesondere umfasst der Rohling vorzugsweise eine Leichtmetall-Knetlegierung, wobei er bevorzugt aus einer solchen besteht.

Vorzugsweise wird zumindest ein Teilelement des Dachrahmens durch Kombinationsschmieden hergestellt. Dies spricht an, dass die Arbeitstemperatur bei der Umformung vorzugsweise oberhalb und anschließend auch unterhalb einer Rekristallisationstemperatur des bearbeiteten Materials liegt. Es sind vergleichsweise enge Maßtoleranzen darstellbar.

Alternativ wird bevorzugt, dass zumindest ein Teilelement des Dachrahmens durch Warmschmieden hergestellt wird. Dies spricht an, dass die Arbeitstemperatur bei der Umformung vorzugsweise oberhalb einer Rekristallisationstemperatur des Materials liegt. Vorteilhaft hierbei ist, dass vergleichsweise geringe Umformkräfte erforderlich sind. Dabei sind jedoch weniger enge Maßtoleranzen darstellbar als beim Kombinationsschmieden.

Bevorzugt wird zumindest ein Teilelement des Dachrahmens zumindest lokal einer Wärmebehandlung, beispielsweise einem Abschrecken, unterzogen, um die mechanischen Eigenschaften des Teilelements oder auch des gesamten Dachrahmens in gewünschter Weise einzustellen. Insbesondere ist die Anpassung eines Eigenschaftsprofils für das Teilelement oder auch den gesamten Dachrahmen durch eine geeignete und parametrierbare Wärmebehandlung möglich. Insbesondere werden hierdurch Gefügeveränderungen bewirkt, welche sich auf die mechanischen Eigenschaften auswirken, sodass diese mittels der Wärmebehandlung beeinflusst werden können.

Es wird ein Verfahren bevorzugt, das sich dadurch auszeichnet, dass der gesamte Dachrahmen aus einem Leichtmetall-Rohling geschmiedet wird. Alternativ wird der Dachrahmen vorzugsweise aus mindestens zwei Teilelementen gefügt. Dabei ist bevorzugt mindestens ein Teilelement aus einem Leichtmetall-Rohling geschmiedet. Vorzugsweise sind alle Teilelemente des Dachrahmens aus Leichtmetall-Rohlingen geschmiedet. Die Teilelemente können kraft- form- und/oder stoffschlüssig miteinander verbunden werden, insbesondere miteinander verschraubt, vernietet, hybridumgeformt, verklebt, verlötet, geclincht oder auf andere, geeignete Weise gefügt werden. Besonders bevorzugt werden die Teilelemente allerdings miteinander verschweißt. Dadurch, dass mindestens eines der Teilelemente, vorzugsweise alle Teilelemente aus einem Leichmetall-Rohling geschmiedet sind, sind alle gängigen Fügeverfahren zur Verbindung der Teilelemente untereinander ohne Weiteres anwendbar.

Es wird auch ein Verfahren bevorzugt, das sich dadurch auszeichnet, das zumindest an einem geschmiedeten Teilelementes des Dachrahmens mindestens eine Versteifungsrippe angeformt oder ausgeformt, vorzugsweise angeschmiedet oder ausgeschmiedet wird. Dabei spricht der Begriff "Anformen" oder "Anschmieden" an, dass beim Schmieden ein separates Element stoff-, form- oder kraftschlüssig mit dem sich aus dem Rohling bildenden Teilelement, gegebenenfalls dem gesamten Dachrahmen, verbunden wird. Die Fügeverbindung zwischen den beiden Elementen wird in diesem Fall beim Schmieden bewirkt. Demgegenüber spricht der Begriff "Ausformen" oder "Ausschmieden" an, dass eine Kontur der Versteifungsrippe, mithin die Versteifungsrippe selbst, aus dem Material des Leichtmetall-Rohlings beim Schmieden durch Umformung ausgebildet beziehungsweise hergestellt wird. Jedenfalls sind auf diese Weise lokale Versteifungsrippen auf einfache Weise ohne zusätzliche Verfahrensschritte zumindest an einem Teilelement des Dachrahmens, vorzugsweise an dem gesamten Dachrahmen, bedarfsgerecht darstellbar.

Schließlich wird ein Verfahren bevorzugt, das sich dadurch auszeichnet, dass zumindest in ein geschmiedetes Teilelement des Dachrahmens, vorzugsweise in den gesamten, insgesamt geschmiedeten Dachrahmen, mindestens eine Versteifungseinlage zumindest bereichsweise eingeschmiedet wird. Dabei spricht ein bereichsweises Einschmieden an, dass die Versteifungseinlage in mindestens einem Bereich mit dem Material des Teilelements oder des Dachrahmens umschmiedet wird. Alternativ ist es möglich, dass die Versteifungseinlage vollständig mit dem Material des Teilelements oder des Dachrahmens umschmiedet wird. Als Einlage wird vorzugsweise ein Bauteil verwendet, welches höher- /hochfeste Stahleinlagen und/oder faserverstärkten Kunststoff umfasst, vorzugsweise aus faserverstärktem Kunststoff besteht. Dabei werden als Verstärkungsfasern für den Kunststoff vorzugsweise Glas-, Aramid-, Basalt- oder Kohlefasern verwendet.

Das Einschmieden oder Umschmieden eines aus einem von dem Material des Leichtmetall-Rohlings verschiedenen Material gebildeten Elements spricht insbesondere an, dass vorzugsweise ein Hybridschmieden verwendet wird, bei welchem verschiedene Elemente oder Bauteile beim Schmieden miteinander verbunden beziehungsweise gefügt werden. Hierbei ist es möglich, die Bauteile kraft-, stoff- und/oder formschlüssig miteinander zu verbinden.

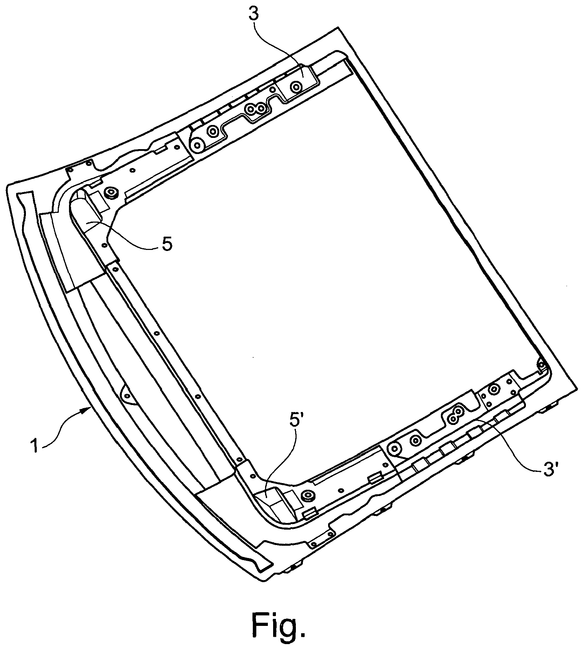

Die Erfindung wird im Folgenden anhand der Zeichnung näher erläutert. Dabei zeigt die einzige Figur eine schematische Darstellung eines Ausführungsbeispiels eines Dachrahmens.

Die einzige Figur zeigt ein schematisch dargestelltes Ausführungsbeispiel eines Dachrahmens 1, der hier insgesamt einstückig aus einem Leichtmetall-Rohling geschmiedet ist. Dabei ist es möglich, dass der Dachrahmen 1 als ein- oder zweischaliges, massivumgeformtes beziehungsweise geschmiedetes Leichtmetallbauteil aus einer Knetlegierung hergestellt ist.

Der in der Figur dargestellte, einstückig geschmiedete Dachrahmen 1 ist als Schiebedachrahmen, insbesondere als Modul für ein nicht dargestelltes Panoramafenster ausgebildet. Er weist Führungsschienen 3, 3' auf, die zur Führung einer Verschiebemechanik für ein Schiebedach vorgesehen sind. Dabei ist es möglich, dass die Führungsschienen 3, 3' an den Dachrahmen 1 angeschmiedet oder an diesem ausgeschmiedet sind. Es ist auch möglich, dass die Führungsschienen 3 in geeigneter Weise mit dem Dachrahmen 1 gefügt, vorzugsweise mit diesem verschweißt sind.

Es sind Versteifungselemente 5, 5' vorgesehen, die auch als Versteifungseinlagen ausgebildet sein können.

Die Versteifungselemente 5, 5' können als separate Elemente mit dem Dachrahmen 1 gefügt, insbesondere mit diesem verschweißt, verschraubt, verlötet, vernietet, verklebt, geclincht oder in anderer Weise mit diesem verbunden sein.

Alternativ ist vorzugsweise vorgesehen, dass die Versteifungselemente 5, 5' zumindest bereichweise an den Dachrahmen 1 angeschmiedet oder mit dem Material des Dachrahmens 1 umschmiedet sind. Es ist auch möglich, mindestens ein Versteifungselement 5, 5' in den Dachrahmen 1 einzuschmieden. Die Versteifungselemente 5, 5' weisen bevorzugt faserverstärkten Kunststoff auf, der vorzugsweise aus Korrosionsgründen gegenüber dem Leichtmetall isoliert ist.

Insgesamt zeigt sich, dass der Dachrahmen 1 beziehungsweise das Verfahren zu dessen Herstellung eine einfache, kostengünstige Möglichkeit darstellen, ohne Kompromisse in Hinblick auf eine mechanische Belastbarkeit Leichtbau zu betreiben, wobei der Dachrahmen 1 zeit- und kostensparend in einfacher Weise mit gängigen Fügeverfahren an eine Kraftfahrzeug-Rohbaustruktur anbindbar ist.

## Patentansprüche

1. Verfahren zur Herstellung eines Dachrahmens (1), bei welchem zumindest ein Teilelement des Dachrahmens (1) aus einem Leichtmetall-Rohling durch Schmieden hergestellt wird,
**dadurch gekennzeichnet, dass**
beim Schmieden des Teilelements des Dachrahmens (1) ein Bauteil mit diskontinuierlichem Querschnittsverlauf mit einem geeignet eingestellten Faserverlauf gestaltet wird, bei dem sich die Fasern in mechanisch hoch belasteten Bereichen sammeln, wobei diese Bereiche mit kleinerer Wandstärke ausbildbar sind.

2. Verfahren nach Anspruch 1, **dadurch gekennzeichnet, dass** der gesamte Dachrahmen (1) aus einem Leichtmetall-Rohling geschmiedet wird.

3. Verfahren nach Anspruch1, dass der Dachrahmen (1) aus mindestens zwei geschmiedeten Teilelementen gefügt wird, wobei die Teilelemente vorzugsweise miteinander verschweißt werden.

4. Verfahren nach Anspruch 3, **dadurch gekennzeichnet, dass** alle Teilelemente des Dachrahmens (1) vorzugsweise aus Leichtmetall-Rohlingen geschmiedet sind.

5. Verfahren nach einem der Ansprüche 1 bis 4, **dadurch gekennzeichnet, dass** zumindest an einem geschmiedeten Teilelement des Dachrahmens (1) mindestens eine Versteifungsrippe angeformt oder ausgeformt, vorzugsweise angeschmiedet oder ausgeschmiedet wird.

6. Verfahren nach einem der Ansprüche 1 bis 5, **dadurch gekennzeichnet, dass** zumindest in ein geschmiedetes Teilelement des Dachrahmens (1) mindestens eine Versteifungseinlage zumindest bereichsweise eingeschmiedet wird.

## Claims

1. Method for producing a roof frame (1), wherein at least one sub-element of the roof frame (1) is produced by forging from a light metal blank, **characterised in that**, when forging the sub-element of the roof frame (1), a component with a discontinuous cross-section and a suitably adjusted fibre orientation is created, in which the fibres concentrate in regions of high mechanical loading, said regions being designed with a reduced wall thickness.

2. Method according to claim 1, **characterised in that** the entire roof frame (1) is forged from a light metal blank.

3. Method according to claim 1, **characterised in that** the roof frame (1) is joined together from at least two forged sub-elements, the sub-elements being preferably welded to one another.

4. Method according to claim 3, **characterised in that** all sub-elements of the roof frame (1) are preferably forged from light metal blanks.

5. Method according to any of claims 1 to 4, **characterised in that** at least one reinforcement rib is formed integral with or from at least one forged sub-element of the roof frame (1), preferably by forging on or drawing out.

6. Method according to any of claims 1 to 4, **characterised in that** at least one reinforcement insert is forged in at least some regions into at least one forged sub-element of the roof frame (1).

## Revendications

1. Procédé de fabrication d'un cadre de toit (1), au moins une partie du cadre de toit (1) étant fabriquée par forgeage à partir d'une ébauche en métal léger, **caractérisé en ce que** lors du forgeage de la partie de cadre de toit (1) un élément constitutif ayant une orientation transversale discontinue est conçu avec une orientation appropriée des fibres, les fibres se regroupant mécaniquement dans des zones à haute densité, dans lesdites zones formées l'épaisseur de paroi étant inférieure.

2. Procédé selon la revendication 1, **caractérisé en ce que** le cadre de toit (1) complet est forgé à partir d'une ébauche en métal léger.

3. Procédé selon la revendication 1, au moins deux parties forgées s'ajoutent au cadre de toit (1), les parties étant préférence soudées l'une à l'autre.

4. Procédé selon la revendication 3, **caractérisé en ce que** toutes les parties du cadre de toit (1) sont forgées de préférence à partir d'ébauches en métal léger.

5. Procédé selon l'une quelconque des revendications 1 à 4, **caractérisé en ce qu'**au moins sur une partie forgée du cadre de toit (1) est au moins une rainure de renfort est formée ou moulée, de préférence forgée.

6. Procédé selon l'une des revendications 1 à 5, **caractérisé en ce qu'**au moins dans une partie forgée du cadre de toit (1) est forgée au moins une garniture de renfort au moins à certains endroit.
